# EUROPEAN PATENT SPECIFICATION

(11) **EP 3 078 966 B1**
(45) Date of publication and mention of the grant of the patent: **16.08.2017**
(21) Application number: 16382079.8
(22) Date of filing: 25.02.2016
(51) Int. Cl.: G01N 27/407

(54) **DIESEL EXHAUST GAS SENSOR**
DIESELABGASSENSOR
CAPTEUR DE GAZ D'ÉCHAPPEMENT DIESEL

(30) Priority: 07.04.2015 ES 201530455
(43) Date of publication of application: 12.10.2016
(73) Proprietor: Francisco Albero S.A.U., 08908 L'Hospitalet de Llobregat (ES)
(72) Inventor: RAMOS PÉREZ, Francisco, 08908 L' Hospitalet de Llobregat (ES); GARCÍA CANTÓN, Jesús, 08908 L'Hospitalet de Llobregat (ES); GARCÍA VAN EST, Koen, 08908 L'Hospitalet de Llobregat (ES); SILVERA GRAU, Yesli, 08908 L'Hospitalet de LLobregat (ES)
(74) Representative: Stiebe, Lars Magnus

(56) References cited:
- EP-A1- 1 494 023
- EP-A1- 2 840 388
- JP-A- 2000 088 795
- US-A- 5 762 771
- US-A1- 2010 242 574

## Description

### Object of the Invention

The object of the invention is a diesel exhaust gas sensor provided with a protector cap suitable for covering the part of the sensor exposed to a gas to be measured, specifically, of the exhaust gas from diesel engines.

### Field of the Invention

This invention is applicable in the manufacture of diesel engine exhaust gas sensors.

### Background of the Invention

The internal combustion engine exhaust gas sensors have been extensively reported. One example is seen in Patent No. US4647364. Located in the exhaust pipe, these sensors are used to control the air/fuel mixture so as to establish a mixture as close to the stoichiometric ratio as possible by measuring the oxygen content in the exhaust gas, so that dangerous emissions are reduced to a minimum due to an optimized combustion.

Exhaust gas sensors are generally provided with a thimble-shaped protector cap to cover and to protect the sensor part of the ceramic electrolyte that is exposed to the gas to be measured. They are provided with openings that make it possible for the gas to be measured to circulate through them and to arrive at said sensor zone in a controlled manner. The majority of current protector caps have a concentric, double cover structure with different openings through which the gas to be measured enters and exits. This double structure prevents thermal shock that could produce drops of water dragged by the flow of gas onto the ceramic electrolyte to form when, during the heating phase, the water vapor generated by the combustion from the engine condenses on the cold surfaces of the exhaust system. The drops of water are retained on the lateral surface of the internal cylinder and they evaporate slowly due to the increase in the temperature of the exhaust gas while the engine heats up.

One example of a double protector cap is shown in patent No. US5762771. This protector cap is formed by an internal cover in the shape of a thimble that covers closely the ceramic electrolyte and an external cover, also in the shape of a thimble, that covers the first one. Both covers are fixed to a housing shaped like a hexagonal cylinder in which the ceramic electrolyte is axially fastened. The opening area of both covers is divided into two tabs that fit together in an interleaved fashion. The end of these tabs are bent outwardly, allowing the covers to be fixed to the housing by riveting.

The installation of this structure is simple and it adequately protects the ceramic electrolyte of the exhaust gas in gasoline engines, but when it is located at the outlet of exhaust gas from a diesel engine, it does not prevent the ceramic electrolyte from being covered by soot expelled from diesel combustion or the openings in the protector cap itself from becoming clogged by the soot if one attempts to make them smaller. Additionally, the tabs on the covers described by the patent above are joined to the housing by riveting, which produces greater sealing and fastening defects than those produced by welding joints.

Soot produces many adverse effects in gas sensors, especially in its durability, and therefore it is vitally important to protect them from these effects when they are located in a diesel combustion environment. Patents US7810375 and US7390385 show a protector cap which includes a third cover, thus obtaining greater protection against soot, without affecting the sensor dynamic.

The additional cover obstructs the route of arrival of the soot to the ceramic electrolyte, which at the same time allows an increase in the diameter of the openings where the gas enters and exits to prevent that they become clogged by soot. The particles that pass through the openings in the two external covers are burned off upon contacting the inner cover, which heats up rapidly reaching a temperature that is high enough for the combustion process of the soot particles due to its greater proximity to the built-in heater in the sensor element. In these patents, the inner cover is mounted axially on the inside of the housing; the open area of the cover thickens conically and said area is supported on the wall of the housing, and becomes fixed due to the pressure exerted upon it by the sealing element strongly compressed inside the housing. An example of this type of protector cap may be seen on the BOSCH LSU4.9D gas sensor. The disadvantage to this type of protector cap regarding that reported in patent No. US5762771, is the greater simplicity of assembly and the corresponding increase in the cost of production.

Examples for triple protector caps are EP2840388 and US2010/0242574.

### Descriptions of the Invention

The invention concerns a diesel exhaust gas sensor and specifically the configuration of a protector cap for the sensor element; the protector cap of which consists of three concentric covers formed by metal cylinders, that are supported on the housing of the sensor and that protect the area of the ceramic electrolyte sensitive to the gas to be measured.

The inner cover has three equidistant tabs bent outwardly from the area of the opening and the middle cover has the other three. The external cover has six tabs, not necessarily bent outwardly, that form six angularly equidistant spaces into which the tabs of the inner and middle covers are engaged. In this way, the three covers may be fixed and sealed together on the housing by welding and/or riveting in the same manufacturing process as the oxygen sensor.

So that the covers do not swing around when their tabs rest on the housing, it is necessary to have a minimum of three angularly equidistant tabs on each cover but their size would be too small in the case of having four or more tabs on the inner and middle covers. This is why the proper number of tabs is three on the inner and middle cover, and six on the external cover.

Because nowadays laser welding has become widely popular because of its low cost and superior performance, laser welding is preferable to riveting, because sealing defects are reduced and the attachment between the housing and the protector cap is enhanced.

So that the tabs on the inner protector cap are not too long and to specify the positioning between the inner and middle cover, the part close to the opening of the cylinder of the inner cover is widened, so that is snugly fitted with the middle cover. Slits in the contact surfaces of both covers fit inside the other, so as to establish the equidistant angular position of the tabs.

Herein is presented with the invention, a gas sensor with reliable protection against thermal shock due to contact with water and against contamination by the soot of diesel engine exhaust gases, as well as great simplicity of assembly, low production costs and reduction of defects with regard to the protector caps as reported in the Prior Art.

The above characteristics and advantages of this invention will become more apparent from the following description, taking it in conjunction with the attached drawings in which a preferred embodiment of this invention is shown as an illustrative example.

### Description of the Figures

Figure 1 is an isometric view of the diesel exhaust gas sensor, with protective covers sectioned.
Figure 2a is an isometric view and Figure 2b is an overhead view of the inner protective cover.
Figure 3a is an isometric view and Figure 3b is an overhead view of the middle protective cover.
Figure 4 is an isometric view of the external protective cover.
Figure 5 is a sectional side view of the protective covers and the housing of the gas sensor.

### Detailed Description of the Invention

The diesel exhaust gas sensor is described below in accordance with a preferred embodiment of this invention.

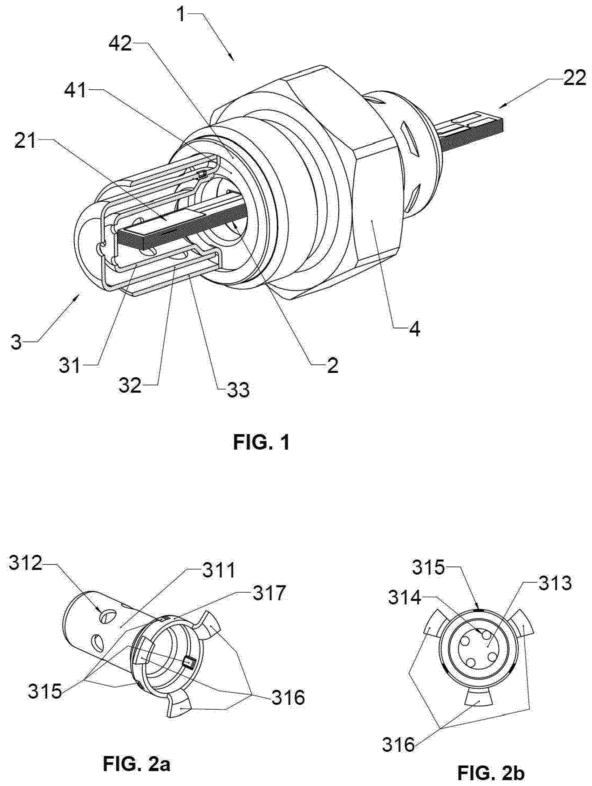

As shown in Figure 1, the gas sensor (1) comprises a sensor element (2), a protector cap (3), in sections in this Figure, arranged to cover the sensor area (21) of the sensor element (2) and a housing (4) in a cylindrical and hexagonal shape to which is concentrically welded the protector cap (3) (welding not shown in this Figure). The housing (4), while holding the sensor element (2) in such a way that it hermetically seals and isolates the connection area (22) of the sensor section (21) through which the gas flows to be measured.

The protective cover (3) comprises an inner protective cover (31) that covers the sensor area (21), a middle protective cover (32) that covers the inner protective cover (31), and an external protective covering (33) located around the middle protective cover (32).

The inner protective cover (31) is a metal cylinder closed at one end, as shown in Figures 2a and 2b. The cylindrical surface (311) contains a plurality of gas inlet openings (312) and the flat surface (313) contains a plurality of gas outlet openings (314).

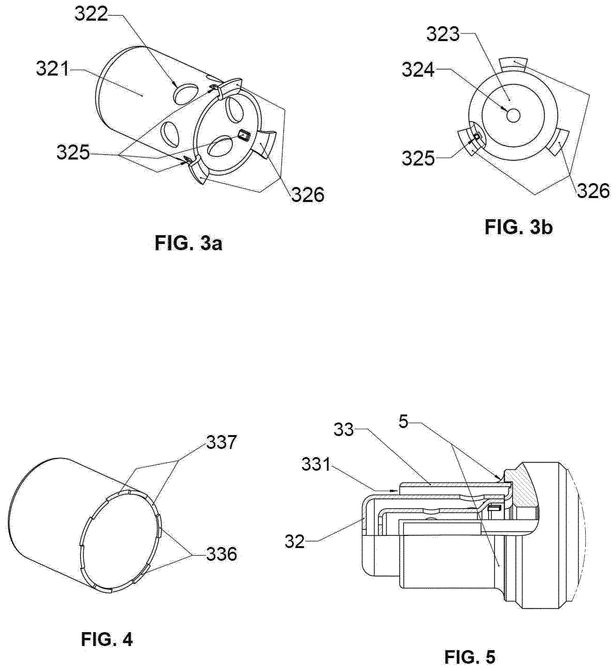

The middle protective cover (32) is also a metal cylinder closed at one end, as shown in Figures 3a and 3b. The cylindrical surface (321) contains a plurality of gas inlet openings (322) which are not aligned with the inlet gas openings (312) of the inner protective cover (31). The flat surface (323) of the end contains an outlet gas opening (324) located in the center.

To specify the concentric position of the inner cover (31) within the middle cover (32), the cylinder of the first has a widened section (317) so that it fits snugly within the middle cover (32). To establish the angularly equidistant position of the tabs of the two covers (31) and (32), slits (315) and (325) are created in the walls having contact with both covers (31) and (32), so that the slit (325) only fits within the slit (315) when both covers (31) and (32) are in the proper angular direction.

The external protective cover (33) is also a metal cylinder, but in this preferred embodiment of the invention, no end or opening in the wall is closed, as shown in Figure 4. The gas enters the protector cap through the equidistant separation (331) (marked in Figure 5) that exists between the external protective cover (33) and the middle protective cover (32).

So that said protective covers (31), (32) and (33) may be fastened and sealed to the housing (4) they contain tabs (316, 326, 336) located in the area contiguous to the housing (4).

The tabs (316) of the inner cover (31) are bent outwardly and are interlinked and angularly equidistant from the tabs (326) which are also bent outwardly from the middle cover (32).

The six tabs (336) of the external protective cover (33) create six angularly equidistant openings (337), which alternately engage the tabs (316, 326) of the respective covers (31) and (32).

The tabs (316, 326, 336) of the protective covers (31), (32) and (33) are supported on the surface (41) of the housing (4). On the perimeter of the surface (41) there is a circular rib (42) into which the tabs (316, 326, 336) are engaged concentrically within its interior and which are welded in a gastight seal around the perimeter. The circumferential weld bead (5), preferably produced by laser welding, is shown in Figure 5.

## Claims

1. Diesel exhaust gas sensor comprising a sensor element (2) that has a sensor (21) area suitable for measuring a preset component of a gas to be measured, a housing (4) that supports said sensor element (2) and a protector cap (3) that is attached to said housing (4) and that surrounds said sensor (21) area of said sensor element (2), wherein:
- an inner protective cover (31) formed by a metal cylinder closed at one end, that covers the sensor area (21) of the sensor element (2) and that contains openings (312, 314) that allow circulation within its interior of the gas to be measured,
- A middle protective cover (32) formed by a metal cylinder closed at one end, that covers said inner protective cover (31) concentrically and that contains openings (322, 324) that allow circulation within its interior of the gas to be measured,
- an external protective cover (33) formed by a metal cylinder, that covers said inner protective cover (32) concentrically, **characterized in that**
the cylindrical wall of said inner protective cover (31) has a widened section (317) in the area of the opening that fits snugly to the cylindrical wall of said middle protective cover (32) that covers said inner protective cover (31) concentrically and said middle protective cover (32) comprises, each one, three angularly equidistant tabs (316, 326) and bent outwardly on the open end, and said external protective cover (33) has six tabs (336) that form six angularly equidistant openings (337),
into which the tabs (316, 326) alternately engage from said inner and middle protective covers (31, 32),
and in which said tabs are attached around its perimeter by means of a circumferential weld bead (5) to a peripheral rib on the surface of said housing (4) where said tabs (316, 326, 336) are accommodated.

2. Gas sensor in accordance with Claim 1, **characterized in that** the inner protective cover (31) has one or several slits in the lateral wall (315) that fit into one or various slits (325) that middle protective cover has (32) in the side wall.

3. Gas sensor in accordance with Claim 1 or 2, **characterized in that** said external protective cover (33) is closed on one end and comprises openings that allow for the gas to be measured to circulate on its interior.

## Patentansprüche

1. Dieselabgassensor, umfassend ein Sensorelement (2), welches einen Sensorbereich (21) aufweist, welcher geeignet ist, eine bestimmte Komponente eines zu messenden Gases zu messen, ein Gehäuse (4), welches das Sensorelement (2) aufnimmt, und eine Schutzkappe (3), welche an dem Gehäuse (4) angeordnet ist und den Sensorbereich (21) des Sensorelementes (2) umgibt, wobei weiterhin
- eine innere Schutzabdeckung (31), welche aus einem einseitig geschlossenen Metallzylinder gebildet ist und welche den Sensorbereich (21) des Sensorelementes (2) bedeckt und weiche Öffnungen (312,314) aufweist, welche eine Zirkulation des zu messenden Gases in ihr Inneres zulassen
- eine mittlere Schutzabdeckung (32), welche aus einem einseitig geschlossenen Metallzylinder gebildet ist und weiche die innere Schutzabdeckung (31) konzentrisch umgibt und welche Öffnungen (322,324) aufweist, welche eine Zirkulation des zu messenden Gases in ihr Inneres zulassen
- eine äußere Schutzabdeckung (33),welche aus einem Metallzylinder gebildet ist und welche die innere Schutzabdeckung (31) konzentrisch umgibt
vorhanden sind
**dadurch gekennzeichnet, dass**
der Zylindermantel der inneren Schutzabdeckung (31) im Bereich seiner Öffnung aufgeweiteten Abschnitt (317) aufweist, welcher passgenau in die mittlere Schutzabdeckung (32), welche die innere Schutzabdeckung (31) konzentrisch umgibt, eingepasst ist und wobei sowohl die die mittlere (32) wie auch die innere (31) Schutzabdeckung drei im gleichen Winkelabstand angeordnete Laschen (316,326) aufweisen, welche an ihrem offenen Ende nach außen gebogen sind und wobei die äußere Schutzabdeckung (33) sechs Laschen (336) aufweist, durch welche sechs in gleichem Winkelabstand angeordnete Ausnehmungen (337) gebildet sind, in welche die Laschen (316,326) der inneren (31) und der mittleren (32) Schutzabdeckung alternierend eingreifen, und in welchen die Laschen entlang ihres Umfanges mittels einer umlaufenden Schweißnaht (5) mit einer äußeren Rippe auf der Oberfläche des Gehäuses (4) verbunden sind.

2. Gassensor nach Anspruch 1,
**dadurch gekennzeichnet, dass**
die innere Schutzabdeckung (31) einen oder mehrere Schlitze in ihrer Längswandung (315) aufweist, welche einem oder mehreren Schlitzen (325) in der Seitenwandung der mittleren Schutzabdeckung (32) korrespondieren.

3. Gassensor nach Anspruch 1 oder 2,
**dadurch gekennzeichnet, dass**
die äußere Schutzabdeckung (33) einseitig geschlossen ist und Öffnungen aufweist, welche einen Durchtritt des zu messenden Gases in ihr Inneres erlauben.

## Revendications

1. Détecteur de gaz d'échappement diesel qui comprend un élément de détection (2) qui possède une zone de détection (21) adaptée pour mesurer une composante prédéfinie d'un gaz à mesurer, une enceinte (4) qui supporte ledit élément de détection (2) et un embout de protection (3) qui est relié à ladite enceinte (4) et qui entoure ladite zone de détection (21) dudit élément de détection (2), dans lequel :
- un capot de protection interne (31) formé par un cylindre métallique fermé à une extrémité, qui recouvre la zone de détection (21) de l'élément de détection (2) et qui contient des ouvertures (312, 314) qui permettent la circulation, à l'intérieur, du gaz à mesurer,
- un capot de protection intermédiaire (32) formé par un cylindre métallique fermé à une extrémité, qui recouvre ledit capot de protection interne (31) de manière concentrique et qui contient des ouvertures (322, 324) qui permettent la circulation, à l'intérieur, du gaz à mesurer,
- un capot de protection externe (33) formé par un cylindre métallique, qui recouvre ledit capot de protection interne (32) de manière concentrique,
**caractérisé en ce que**
la paroi cylindrique dudit capot de protection interne (31) possède une section élargie (317) dans la zone de l'ouverture qui s'ajuste parfaitement à la paroi cylindrique dudit capot de protection intermédiaire (32) qui recouvre ledit capot de protection interne (31) de manière concentrique, et ledit capot de protection intermédiaire (32) comprend trois languettes qui sont chacune équidistantes de manière angulaire (316, 326) et inclinées vers l'extérieur sur l'extrémité ouverte, et ledit capot de protection externe (33) possède six languettes (336) qui forment six ouvertures équidistantes de manière angulaire (337),
dans lequel les languettes (316, 326) s'engagent par alternance depuis lesdits capots de protection interne et intermédiaire (31, 32),
et dans lequel lesdites languettes sont fixées autour de son périmètre à l'aide d'une bille de soudage circonférentielle (5) sur une nervure périphérique située sur la surface de ladite enceinte (4), à l'endroit où se trouvent lesdites languettes (316, 326, 336).

2. Détecteur de gaz selon la revendication 1, **caractérisé en ce que** le capot de protection interne (31) possède une ou plusieurs fentes dans la paroi latérale (315), qui s'ajustent dans une ou différentes fentes (325) que le capot de protection intermédiaire (32) possède dans la paroi latérale.

3. Détecteur de gaz selon la revendication 1 ou 2, **caractérisé en ce que** ledit capot de protection externe (33) est fermé sur une extrémité et comprend des ouvertures qui permettent au gaz à mesurer de circuler à l'intérieur.
